# FASCICULE DE BREVET EUROPEEN

(11) **EP 0 726 123 B1**
(45) Date de publication et mention de la délivrance du brevet: **10.06.1998**
(21) Numéro de dépôt: 95402971.6
(22) Date de dépôt: 28.12.1995
(51) Int. Cl.: B25J 17/02, B23P 19/04, B62D 65/00

(54) **Outil associable à un robot pour la pose automatique d'un joint d'étanchéité**
Roboterverbundenes Werkzeug zum Montieren von Dichtungsstreifen
Robot-held tool for automatically fitting sealing strips

(30) Priorité: 10.02.1995 FR 9501585
(43) Date de publication de la demande: 14.08.1996
(73) Titulaire: AUTOMOBILES PEUGEOT, 75116 Paris (FR); AUTOMOBILES CITROEN, 92200 Neuilly-sur-Seine (FR)
(72) Inventeur: Pichot, Bertrand, F-91070 Bondoufle (FR)
(74) Mandataire: Durand, Yves Armand Louis

(56) Documents cités:
- EP-A- 0 149 806
- EP-A- 0 451 023
- EP-A- 0 503 992
- EP-A- 0 514 228
- FR-A- 2 527 499
- FR-A- 2 695 587
- GB-A- 2 237 836

## Description

La présente invention a pour objet un outil associable à un robot pour la pose automatique d'un joint d'étanchéité, tel que par exemple un joint d'entrée de porte de véhicule.

On a déjà proposé des outils associables au poignet d'un robot et dont la tête est munie de maillets vibrants pour permettre le montage d'un joint dans une feuillure, étant bien entendu que le robot permet à l'outil d'effectuer une trajectoire correspondant à la forme de la feuillure dans laquelle doit être inséré et monté le joint.

Toutefois, l'outil fixé sur le poignet du robot constituait un ensemble rigide, c'est-à-dire un ensemble dépourvu de souplesse et/ou d'élasticité, de sorte que l'outil ne pouvait pas encaisser ou se conformer précisément aux irrégularités de forme des joints ou de la feuillure les recevant au cours de la trajectoire de l'outil imposée par le robot.

Il pouvait par conséquent en résulter des défauts de montage du joint sur la feuillure réceptrice.

La présente invention a donc pour but de remédier à ces inconvénients en proposant un outil assurant un montage automatique et parfait d'un joint d'étanchéité dans la feuillure d'une pièce quelconque, quelles que soient les irrégularités de forme possibles du joint ou de la feuillure recevant ce joint.

A cet effet, l'invention a pour objet un outil associable à un robot pour la pose automatique d'un joint d'étanchéité ou analogue, tel que par exemple un joint d'entrée de porte de véhicule, caractérisé en ce qu'il se compose d'un bâti destiné à être fixé sur le poignet du robot et sur lequel est montée articulée la partie active de l'outil qui coopère avec le bâti par l'intermédiaire de moyens d'asservissement souples permettant d'adapter le mouvement de l'outil à la trajectoire imposée par le robot, quelles que soient les irrégularités de forme possibles du joint on de la feuillure recevant le joint.

Suivant une autre caractéristique de cet outil, la partie active précitée est montée articulée sur un axe du bâti orthogonal à la direction de l'effort exercé sur le joint pour le monter sur la pièce.

Le bâti est muni de vérins pneumatiques ou analogues dont les pistons coopèrent avec la partie active de l'outil, ces vérins constituant un moyen d'asservissement "en souplesse" du mouvement de l'outil à la forme du joint ou de la pièce recevant ce joint, quelle que soit cette forme.

Selon encore une autre caractéristique de l'invention, la partie active de l'outil est maintenue latéralement par des galets solidaires du bâti.

Par ailleurs, cet outil comporte au moins un détecteur de défauts de déplacement de la partie active de l'outil par rapport au bâti, ce détecteur étant associé audit bâti et coopérant avec une came ou analogue solidaire de la partie active de l'outil.

Cet outil est encore caractérisé par un moyen, tel que par exemple une vis, assurant le verrouillage de la partie active de l'outil sur le bâti.

Suivant un mode de réalisation préféré, la partie active de l'outil comporte une tête munie de maillets vibrants et d'au moins une cage pour le joint formée d'un jeu de doigts fixes et d'un doigt mobile permettant l'ouverture et la fermeture de la cage.

Le doigt mobile précité est actionné par un vérin solidaire de la partie active de l'outil.

Ce doigt mobile traverse une pièce solidaire de la tête de la partie active et empêchant ledit doigt de tourner autour de l'axe du vérin précité, ce doigt mobile ainsi que les doigts fixes étant montés librement tournants autour de leurs axes sur la tête de la partie active de l'outil.

L'outil selon cette invention est encore caractérisé par le fait que la tête de la partie active est munie d'un détecteur de présence ou non du joint dans la cage précitée.

Suivant un mode de réalisation préféré, la tête de la partie active de l'outil comporte deux cages alignées et symétriquement opposées suivant un axe et deux maillets vibrants alignés et symétriquement opposés suivant un axe orthogonal au précédent.

On précisera encore que les maillets vibrants sont solidaires d'un vilebrequin entraîné en rotation par un moteur qui peut être actionné manuellement par un bouton ou analogue.

Ainsi, grâce à ce bouton, les maillets pourront être amenés à la position de départ de référence, c'est-à-dire à la position rentrée.

Mais d'autres avantages et caractéristiques de l'invention apparaîtront mieux dans la description détaillée qui suit et se réfère aux dessins annexés, donnés à titre d'exemple, et dans lesquels:
La figure 1 est une vue quelque peu schématique et en élévation d'un outil de pose automatique d'un joint, conformément aux principes de l'invention.
La figure 2 est une vue de dessus de cet outil.
La figure 3 est une vue de côté de la tête de l'outil suivant la flèche III de la figure 2.
La figure 4 est encore une vue de la tête de l'outil, mais suivant la flèche IV de la figure 3.
La figure 5 est une vue en coupe faite sensiblement suivant la ligne V-V de la figure 2.
La figure 6 est une vue schématique partielle et agrandie du vérin actionnant le doigt mobile permettant l'ouverture ou la fermeture de la cage recevant le joint à poser.

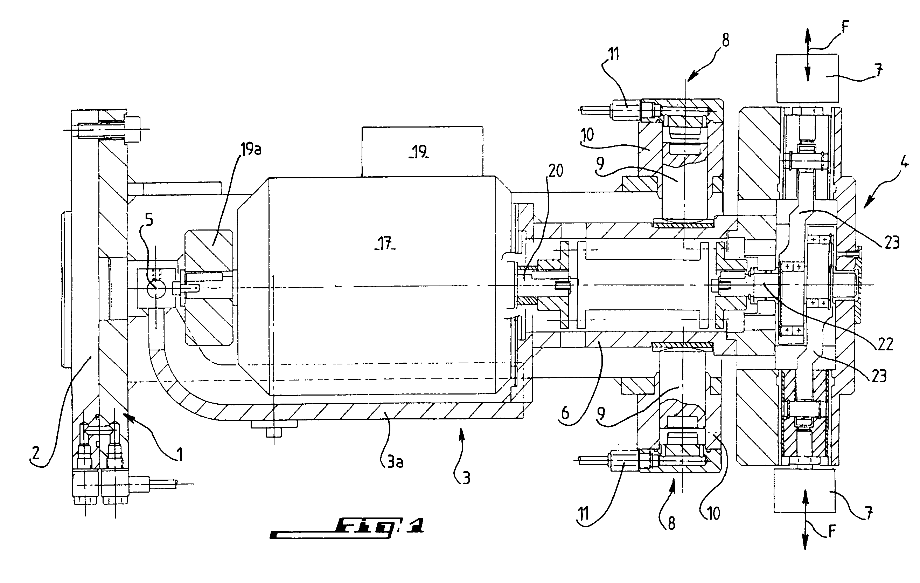

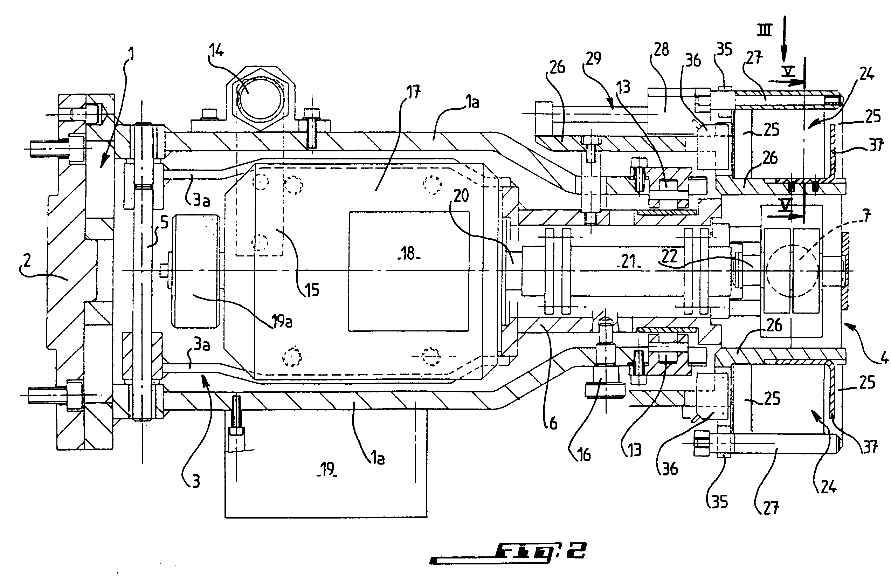

En se reportant plus particulièrement aux figures 1 et 2, on voit qu'un outil de pose automatique d'un joint selon cette invention se compose essentiellement d'un bâti 1 dont la partie arrière est fixée par l'intermédiaire d'une pièce 2 formant interface sur le poignet d'un robot (non représenté) pour assurer les liaisons pneumatiques du robot à l'outil. Sur le bâti 1 est montée articulée une partie active 3 qui comporte une tête de travail repérée en 4 sur la partie droite des figures 1 et 2.

La partie active 3 de l'outil, suivant l'exemple représenté, est essentiellement constituée par deux bras 3a qui sont articulés par une extrémité sur un axe 5 solidaire du bâti 1, tandis que l'autre extrémité des bras 3a se prolonge par un carter ou analogue 6 portant la tête de travail 4 de l'outil.

Comme on peut le comprendre à l'aide des figures 1 et 2, l'axe 5 du bâti 1 est monté entre deux bras ou analogues 1a constituant la partie principale dudit bâti, et cet axe 5 est orthogonal à la direction de l'effort exercé par des maillets vibrants 7 solidaires de la tête de travail 4, cette direction étant matérialisée par des flèches F sur la figure 1.

La partie active 3 de l'outil constituée par les bras 3a, le carter 6 et la tête de travail 4 portant notamment les maillets vibrants 7 pourra pivoter autour de l'axe 5, par rapport au bâti 1, dans un sens ou dans l'autre.

Plus précisément, et comme il apparaît clairement sur la figure 1, le bâti 1 est équipé de vérins pneumatiques opposés 8 dont les pistons 9 coopèrent avec la partie active 3 de l'outil, plus précisément avec le carter 6 qui est une portion de cette partie active. On a montré en 10 le corps des vérins pneumatiques 8, qui fait partie du bâti 1 et qui comporte des raccords 11 d'entrée d'air comprimé.

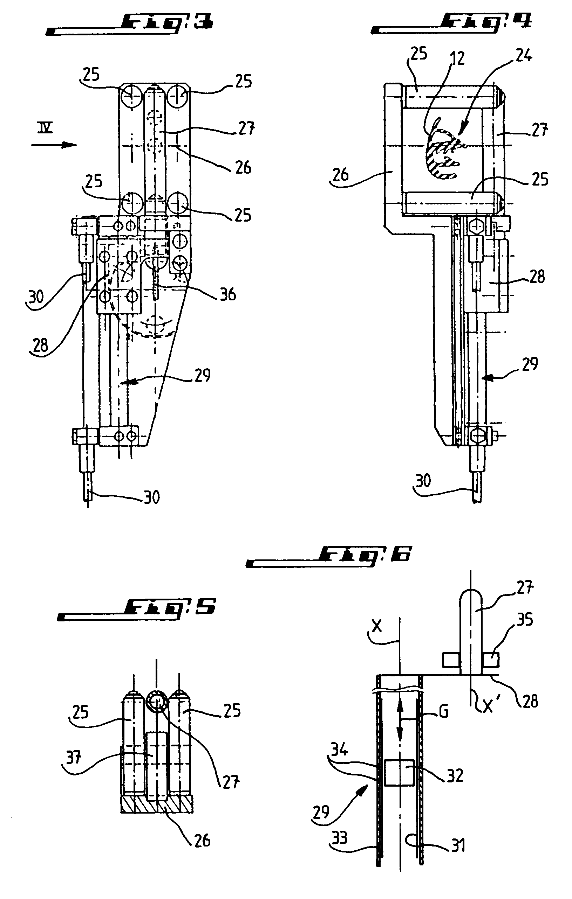

On comprend donc que la partie active 3 de l'outil, montée à rotation sur l'axe 5 du bâti, est montée avec souplesse sur ledit bâti, cette souplesse étant assurée par les deux vérins pneumatiques 8. C'est dire que les vérins pneumatiques 8 constituent un moyen d'asservissement élastique ou avec souplesse du mouvement de l'outil à la conformation de la feuillure de la pièce (non représentée) recevant le joint d'étanchéité repéré en 12 sur la figure 4.

On notera encore qu'un tel montage avec partie active 3 articulée sur le bâti 1 et actionnable par les vérins pneumatiques 8 solidaires du bâti permet avantageusement de s'affranchir du poids de l'outil et, bien évidemment, d'exercer un effort constant, via les maillets vibrants 7, sur le joint 12, comme on le décrira plus loin à propos du fonctionnement, et cela même dans le cas où la feuillure de la pièce recevant le joint, ou bien le joint lui-même, comporte des irrégularités de forme que la tête 4 de l'outil prendra en compte automatiquement. En effet, l'effort exercé sur le joint par les maillets vibrants 7 sera uniquement fonction de la pression du gaz dans les vérins 8.

Comme on le voit bien sur la figure 2, les extrémités des bras 1a du bâti 1 sont munies de galets 13 qui portent sur le carter 6, de sorte que la partie active 3 comprenant ce carter 6 est maintenue latéralement lors de ses déplacements autour de l'axe 5 par rapport au bâti 1, lesquels déplacements sont, comme expliqué plus haut, provoqués par les vérins pneumatiques 8.

Comme on le voit bien sur les figures 1 et 2, les deux galets 13 sont symétriquement opposés et alignés suivant un axe orthogonal à celui des deux vérins pneumatiques 8.

On a montré en 14 sur la figure 2 un détecteur solidaire de l'une des branches 1a du bâti 1, et en 15 une came ou analogue solidaire de l'un des bras 3a de la partie active 3. Ainsi, le détecteur 14 permettra de détecter les défauts de trajectoire de la partie active 3 de l'outil et pourra par exemple signaler un trop grand écartement de cette partie active par rapport au bâti 1.

Sur la figure 2 également, on voit une vis 16 solidaire de l'autre branche 1a du bâti 1 et destinée à permettre le verrouillage du carter 6, c'est-à-dire de la partie active 3 sur le bâti 1. Ce verrouillage permettra de fixer une position de référence ou de départ pour la partie active 3, c'est-à-dire une position relative de la partie active 3 par rapport au bâti 1 que l'on appelle communément la position zéro outil.

Comme on le voit encore sur les figures 1 et 2, un moteur électrique 17 est monté sur la partie active 3 entre les bras 3a. On a montré schématiquement en 18 l'emplacement des connexions électriques du moteur et en 19 l'emplacement des connexions électriques à la partie active 3.

Le moteur 17 peut être entraîné en rotation à la main par un bouton ou analogue 19a, de sorte que les maillets 7 pourront être amenés dans la position de départ de référence, qui est de préférence la position rentrée visible sur la figure 1.

L'arbre de sortie 20 du moteur 17 est relié par l'intermédiaire d'un accouplement 21 logé dans le carter 6 à un vilebrequin 22 dont la rotation, comme on le voit sur la figure 1, permet la translation dans la tête de travail 4 et suivant un mouvement alternatif, de bielles 23 montées sur le vilebrequin et munies chacune à leur extrémité d'un maillet 7.

La tête 4 de la partie active 3 comporte, suivant l'exemple représenté, deux maillets 7 alignés et symétriquement opposés (figure 1) suivant un axe, et elle comporte encore deux cages 24 alignées et symétriquement opposées (figure 2) suivant un axe qui est orthogonal à l'axe précédemment mentionné.

Chaque cage 24 pouvant recevoir un joint d'étanchéité tel que 12, se compose, comme on le voit bien sur les figures 2, 3 et 4, d'un ensemble de cinq doigts, à savoir quatre doigts fixes 25 fixés sur un support 26 solidaire de la tête 4 de la partie active 3, et un doigt mobile 27 permettant l'ouverture et la fermeture de la cage 24.

Ainsi, chaque cage 24 forme un passage de section rectangulaire délimité par les quatre doigts fixes 25, tandis que le doigt mobile 27 est escamotable par translation longitudinale selon son axe pour permettre l'ouverture de la cage afin d'autoriser l'introduction du joint 12 ainsi que sa fermeture pour maintenir et guider ce joint.

On observera ici que les doigts 25 et 27 sont montés librement tournants autour de leur axe, ce qui est de nature à faciliter le déplacement du joint 12 dans sa cage 24. Les doigts 25 et 27 pourront être par exemple constitués chacun par un tube en matière synthétique tournant sur un axe solidaire du support 26 pour les doigts 25 et solidaire d'une pièce en forme d'équerre 28, bien visible sur les figures 3, 4 et 6, pour le doigt mobile en translation 27.

Le doigt 27 est actionné par un vérin 29 représenté schématiquement et partiellement sur la figure 6.

Ce vérin 29 est un vérin pneumatique sans tige dont on voit les alimentations en 30 sur les figures 3 et 4. On voit sur la figure 6 qu'il se compose d'un cylindre 31 dans lequel est monté coulissant un piston 32 réalisé en un matériau magnétique et sollicité suivant la flèche G par la pression du gaz fournie par les alimentations 30. Coaxialement au cylindre 31 et extérieurement à celui-ci est prévu un tube ou analogue 33 formant en quelque sorte un piston extérieur susceptible de coulisser sur le cylindre 31 et portant la pièce en forme d'équerre 28 sur laquelle est fixé le doigt mobile 27. Le piston extérieur 33 est muni de couronnes ou analogues 34 susceptibles de coopérer magnétiquement avec le piston 32 et assurant la fermeture du flux magnétique.

On comprend donc que le déplacement du piston 32 dans le cylindre 31 provoquera le déplacement, dans un sens ou dans l'autre, du piston extérieur 33 et donc du doigt 27 qui pourra ainsi ouvrir ou fermer la cage 24. On observera ici que le doigt 27 est monté axialement coulissant dans une pièce 35 solidaire de la tête 4 de la partie active 3 de l'outil. Ainsi, comme on le voit bien sur la figure 6, le doigt 27 pourra tourner librement autour de son axe X' sur l'équerre 28, mais la pièce 35 empêchera ce doigt 27 de tourner autour de l'axe X du vérin 29 qui est décalé par rapport à l'axe X'. C'est dire qu'on interdit la rotation du piston extérieur 33 du vérin 29 fixé sur le support 26 solidaire de la tête de travail 4 de l'outil.

Revenant aux figures 2, 3 et 5, on voit que la tête 4 de l'outil est munie d'un détecteur de présence ou non du joint 12 dans la cage 24. Plus précisément, ce détecteur est constitué d'une cellule 36 incluant un émetteur/récepteur à rayons infrarouge, et en regard de cette cellule, se trouve un réflecteur 37. Dès lors, la présence du joint 12 à l'intérieur de la cage provoquera l'interruption du rayon infrarouge, que le doigt 27 soit en position de fermeture ou d'ouverture de la cage 24. La commande du système ainsi informée de la présence ou non du joint peut autoriser ou non le départ d'un cycle de la machine, ou encore valider un enchaînement d'étapes dans le processus.

Mais, pour une meilleure compréhension de l'invention qui vient d'être décrite, on expliquera très brièvement son fonctionnement dans ce qui suit.

Le vérin 29 commande la rétraction du doigt 27, ce qui ouvre la cage 24 et permet l'introduction du joint 12 dans cette cage. Le vérin 29 assure ensuite la fermeture de la cage par le doigt 27, de sorte que le joint 12 est maintenu et guidé lors de son montage dans la feuillure (non représentée) d'une pièce quelconque, telle qu'une entrée de porte de véhicule.

Plus précisément, une extrémité libre du joint est montée à la main dans la feuillure, puis l'outil va se déplacer automatiquement le long de cette feuillure suivant une trajectoire imposée par le robot et correspondant à la conformation de la feuillure, étant entendu que les maillets vibrants 7 travailleront lors du mouvement de l'outil pour monter automatiquement le joint dans sa feuillure, lequel joint sortira, au fur et à mesure, de sa cage.

Et, comme expliqué au début de cette description, l'outil "absorbera" ou "encaissera" avantageusement toutes les irrégularités de forme de la feuillure ou même du joint, en raison du mouvement relatif possible de la partie active de l'outil par rapport au bâti de cet outil fixé sur le poignet du robot. En effet, ce mouvement relatif commandé par le robot permettra, notamment grâce aux vérins pneumatiques 8, une adaptation souple et précise du mouvement de l'outil à la conformation de la feuillure et/ou du joint au cours de la trajectoire imposée à l'outil par le robot.

## Revendications

1. Outil associable à un robot pour la pose automatique d'un joint d'étanchéité ou analogue, tel que par exemple un joint (12) d'entrée de porte de véhicule, caractérisé en ce qu'il se compose d'un bâti (1) destiné à être fixé sur le poignet du robot et sur lequel est montée articulée la partie active (3) de l'outil qui coopère avec le bâti (1) par l'intermédiaire de moyens (8) d'asservissement souples permettant d'adapter le mouvement de l'outil à la trajectoire imposée par le robot, quelles que soient les irrégularités de forme possibles du joint (12) ou de la feuillure recevant le joint.

2. Outil selon la revendication 1, caractérisé en ce que la partie active précitée (3) est montée articulée sur un axe (5) du bâti (1) orthogonal à la direction de l'effort exercé sur le joint (12) pour le monter sur la pièce.

3. Outil selon la revendication 1 ou 2, caractérisé en ce que le bâti (1) est muni de vérins pneumatiques ou analogues (8) dont les pistons (9) coopèrent avec la partie active (3).

4. Outil selon l'une des revendications 1 à 3, caractérisé en ce que la partie active (3) de l'outil est maintenue latéralement par des galets (13) solidaires du bâti (1).

5. Outil selon l'une des revendications précédentes, caractérisé par au moins un détecteur (14) de défaut de déplacement de la partie active (3) de l'outil par rapport au bâti (1), ce détecteur étant associé audit bâti et coopérant avec une came ou analogue (15) solidaire de la partie active (3).

6. Outil selon l'une des revendications précédentes, caractérisé par un moyen (16), tel que par exemple une vis, assurant le verrouillage de la partie active (3) de l'outil sur le bâti (1).

7. Outil selon l'une des revendications précédentes, caractérisé en ce que la partie active (3) de l'outil comporte une tête (4) munie de maillets vibrants (7) et d'au moins une cage (24) pour le joint (12) formée d'un jeu de doigts fixes (25) et d'un doigt mobile (27) permettant l'ouverture et la fermeture de la cage.

8. Outil selon la revendication 7, caractérisé en ce que le doigt mobile précité (27) est actionné par un vérin (29) solidaire de la partie active (3) de l'outil.

9. Outil selon la revendication 7 ou 8, caractérisé en ce que le doigt mobile (27) traverse une pièce (35) solidaire de la tête (4) de la partie active (3) et empêchant ledit doigt de tourner autour de l'axe (X) du vérin, ce doigt mobile (27) ainsi que les doigts fixes (25) étant montés librement tournants autour de leur axe sur la tête (4) de la partie active (3) de l'outil.

10. Outil selon l'une des revendications 7 à 9, caractérisé en ce que la tête (4) de la partie active (3) est munie d'un détecteur (36, 37) de présence ou non du joint (12) dans la cage précitée (24).

11. Outil selon l'une des revendications 7 à 10, caractérisé en ce que la tête (4) de la partie active (3) comporte deux cages (24) alignées et symétriquement opposées suivant un axe et deux maillets vibrants (7) alignés et symétriquement opposés suivant un axe orthogonal au précédent.

12. Outil selon l'une des revendications 7 à 11, caractérisé en ce que les maillets vibrants (7) sont solidaires d'un vilebrequin (22) entraîné en rotation par un moteur (17) qui peut être actionné manuellement par un bouton ou analogue (19).

## Claims

1. Tool which may be associated with a robot for the automatic positioning of a sealing joint or the like such for example as a joint (12) for a vehicle door entrance, characterized in that it consists of a frame (1) intended to be fastened onto the wrist of the robot and onto which wrist is pivotally mounted the active portion (3) of the tool which co-operates with the frame (1) through the medium of flexible follow-up interlocking means (8) permitting to adapt the motion of the tool to the path of travel imposed by the robot irrespective of the possible shape irregularities of the joint (12) of the fillister receiving the joint.

2. Tool according to claim 1, characterized in that the aforesaid active portion (3) is pivotally mounted onto a pin (5) of the frame (1) orthogonal to the direction of the fore exerted upon the joint (12) for mounting it onto the part.

3. Tool according to claim 1 or 2, characterised in that the frame (1) is provided with pneumatic jacks or the like (8) the pistons (9) of which co-operate with the active portion (3).

4. Tool according to one of claims 1 to 3, characterized in that the active portion (3) of the tool is held sidewise by rollers (13) made fast to the frame (1).

5. Tool according to one of the foregoing claims, characterized by at least one detector (14) for a defect of displacement of the active portion (3) of the tool with respect to the frame (1), this detector being associated with the said frame and co-operating with a came or the like (15) made fast to the active portion (3).

6. Tool according to one of the foregoing claims characterized by a means (16), such, for example, as a screw providing the locking of the active portion (3) of the tool to the frame (1).

7. Tool according to one of the foregoing claims, characterized in that the active portion (3) of the frame comprises a head (4) provided with vibrating mallets (7) and with at least one cage (24) for the joint (12) formed of a set of stationary fingers (25) and of a movable finger (27) permitting the opening and the closing of the cage.

8. Tool according to claim 7, characterized in that the aforesaid movable finger (27) is actuated by a jack (29) made fast to the active portion (3) of the tool.

9. Tool according to claim 7 or 8, characterized in that the movable finger (27) extends through a member (35) made fast to the head (4) of the active portion (3) and preventing the said finger from turning about the axis (X) of the jack, this movable finger (27) as well as the stationary fingers (25) being mounted for free rotation about their axis on the head (4) of the active portion (3) of the tool.

10. Tool according to one of claims 7 to 9, characterized in that the head (4) of the active portion (3) is provided for a detector (36, 37) of the presence or absence of the joint (12) in the aforesaid cage (24).

11. Tool according to one of claims 7 to 10, characterized in that the head (4) of the active portion (3) comprises two cages (24) aligned and symmetrically opposed along an axis and two vibrating mallets (7) aligned and symmetrically opposed along an axis orthogonal to the foregoing one.

12. Tool according to one of claims 7 to 11, characterized in that the vibrating mallets (7) are made fast to a crankshaft (22) rotated by a motor (17) which may be actuated manually or with a button or the like (19).

## Patentansprüche

1. Werkzeug, das einem Roboter zur automatischen Verlegung einer Dichtung oder dergleichen, wie zum Beispiel eines Dichtungsstreifens (12) eines Fahrzeugtüreinganges zugeordnet werden kann, dadurch gekennzeichnet, dass es aus einem zur Befestigung an dem Handgelenk des Roboters bestimmten Rahmen (1) besteht und an welchem Handgelenk der wirksame Teil (3) des Werkzeuges gelenkig angeordnet ist und mit dem Rahmen (1) über nachgiebige Nachlaufmittel (8) zusammenwirkt, die es gestatten, die Bewegung des Werkzeuges an die durch den Roboter aufgezwungene Laufbahn anzupassen, was auch die möglichen Formunregelmössigkeiten des Dichtungsstreifens (12) oder des den Dichtungsstreifen aufnehmenden Anschlagfalzes sein mögen.

2. Werkzeug nach Anspruch 1, dadurch gekennzeichnet dass der vorgenannte wirksame Teil (3) an einem Stift (5) des Rahmens (1) gelenkig angeordnet ist, wobei der Stift senkrecht zu der Richtung der auf den Dichtungsstreifen (12) ausgeübten Kraft zur Anordnung desselben an dem Stück verläuft.

3. Werkzeug nach Anspruch 1 oder 2, dadurch gekennzeichnet, dass der Rahmen (1) mit pneumatischen Kraftzylindern oder dergleichen (8), deren Kolben (9) mit dem wirksamen Teil (3) zusammenwirken, versehen ist.

4. Werkzeug nach einem der Ansprüche 1 bis 3, dadurch gekennzeichnet, dass der wirksame Teil (3) des Werkzeuges durch mit dem Rahmen (1) fest verbundene Rollen (13) seitwärts gehalten wird.

5. Werkzeug nach einem der vorangehenden Ansprüche, gekennzeichnet durch wenigstens eine Abtaster (14) fü die Verschiebungsfehler des wirksamen Teiles (3) des Werkzeuges in bezug auf den Rahmen (1), wobei dieser Abtaster dem besagten Rahmen zugeordnet ist und mit einem mit dem wirksamen Teil (3) fest verbundenen Nocken oder dergleichen (15) zusammenwirkt.

6. Werkzeug nach einem der vorangehenden Ansprüche, gekennzeichnet durch ein die Verriegelung des wirksamen Teiles (3) des Werkzeuges an dem Rahmen (1) gewährleistendes Mittel (16), wie z.B. eine Schraube.

7. Werkzeug nach einem der vorangehenden Ansprüche, dadurch gekennzeichnet, dass der wirksame Teil (3) des Werkzeuges einen mit schwingungsfähigen Klöpfeln (7) und wenigstens einem Käfig (24) für den Dichtungsstreifen (12) versehenen Kopf (4) aufweist, wobei der Käfig durch einen Satz ortsfester Finger (25) und einen das Öffnen und das Schliessen des Käfigs gestattenden bewegbaren Finger (27) gebildet wird.

8. Werkzeug nach Anspruch 7, dadurch gekennzeichnet, dass der vorgenannte bewegbare Finger (27) durch einen mit dem wirksamen Teil (3) des Werkzeuges fest verbundenen Kraftzylinder (29) betätigt wird.

9. Werkzeug nach Anspruch 7 oder 8, dadurch gekennzeichnet, dass der bewegbore Finger (27) ein mit dem Kopf (4) des wirksamen Teiles (3) fest verbundenes und die Drehung des besagten Fingers um die Achse (X) des Kraftzylinders verhinderndes Stück (35) durchsetzt, wobei dieser bewegbare Finger (27) sowie die ortsfesten Finger (25) um ihre Achse herum an dem Kopf (4) des wirksamen Teiles (3) des Werkzeuges frei drehbar angeordnet sind.

10. Werkzeug nach einem der Ansprüchen 7 bis 9, dadurch gekennzeichnet, dass der Kopf (4) des wirksamen Teiles (3) mit einem Fühler (36, 37) für das Vorhandensein oder die Abwesenheit des Dichtungsstreifens (12) in dem vorgenannten Käfig (24) versehen ist.

11. Werkzeug nach einem der Ansprüche 7 bis 10, dadurch gekennzeichnet, dass der Kopf (4) des wirksamen Teiles (3) zwei entlang einer Achse fluchtend ausgerichtete und symmetrisch entgegengesetzte Käfige (24) und zwei entlang einer zur vorangehenden Achse senkrechten Achse fluchtend ausgerichtete und symmetrisch entgegengesetzte schwingungsfähige Klöpfel (7) aufweist.

12. Werkzeug nach einem der Ansprüche 7 bis 11, dadurch gekennzeichnet, dass die schwingungsfähigen Klöpfel (7) mit einer zum Umlaufen durch einen mit einem Knopf oder dergleichen (19) handbetätigbaren Motor (17) angetriebenen Kurbelwelle (22) fest verbunden sind.
